Europäisches Patentamt

(19) European Patent Office

Office européen des brevets

(11) Numéro de publication : **0 165 635**
**B1**

(12)　　　　　　　　**FASCICULE DE BREVET EUROPÉEN**

(45) Date de publication du fascicule du brevet :
13.04.88

(51) Int. Cl.⁴ : **B 25 J　9/06**, B 25 J　9/14,
　　　　B 25 J　3/04

(21) Numéro de dépôt : **85200867.1**

(22) Date de dépôt : **31.05.85**

(54) **Dispositif de liaison a plusieurs degres de liberte.**

(30) Priorité : **13.06.84 FR 8409927**

(43) Date de publication de la demande :
**27.12.85 Bulletin 85/52**

(45) Mention de la délivrance du brevet :
**13.04.88 Bulletin 88/15**

(84) Etats contractants désignés :
**CH DE GB IT LI NL SE**

(56) Documents cités :
**EP-A- 0 017 016**
**EP-A- 0 113 145**
**GB-A- 2 033 010**
**GB-A- 2 091 908**
**US-A- 3 279 624**
**US-A- 3 284 964**
**US-A- 3 449 008**

(73) Titulaire : **CENTRE NATIONAL DE LA RECHERCHE
SCIENTIFIQUE (CNRS)**
**15, Quai Anatole France**
**F-75700 Paris (FR)**

(72) Inventeur : **Clot, Jean**
**5 rue des Vignes**
**F-31650 Saint-Orens (FR)**
Inventeur : **Falipou Jean**
**5 rue des Pyrénées**
**F-31750 Escalquens (FR)**

(74) Mandataire : **Barre, Philippe**
**Cabinet Barre-Gatti-Laforgue 95 rue des Amidonniers**
**F-31069 Toulouse Cédex (FR)**

Jouve, 18, rue St-Denis, 75001 Paris, France

## Description

L'invention concerne un dispositif mobile de liaison entre un élément porteur et un élément porté. Elle est applicable dans le secteur de la robotique pour réaliser des bras de manipulation.

Dans la demande de brevet EP-A-113 145, considérée comme comprise dans l'état de la technique conformément à l'Art. 54 (3) et (4), on a décrit un dispositif de liaison à action différentielle, comprenant :

- une membrure-support adaptée pour être fixée sur l'élément porteur,
- une membrure mobile adaptée pour permettre la fixation de l'élément porté
- une pluralité de vérins souples agencés entre la membrure-support et la membrure mobile de façon à maintenir ladite membrure mobile par rapport à ladite membrure-support dans une position relative fonction de l'ensemble des états de déformations desdits vérins souples,
- associé et connecté à chacun desdits vérins souples, un réservoir de capacité variable formant avec le vérin souple considéré un circuit de fluide fermé de sorte que la capacité dudit réservoir impose l'état de déformation du vérin souple, chaque ensemble formé d'un vérin souple et d'un réservoir de capacité variable étant associé à un second ensemble formé d'un vérin souple et d'un réservoir de capacité variable pour former un système différentiel,
- des moyens moteurs aptes à permettre de faire varier la capacité des réservoirs précités afin de l'ajuster à des valeurs déterminées, lesdits moyens étant agencés pour actionner simultanément deux réservoirs associés de sorte que leur capacité varie en sens inverse, les deux vérins souples associés subissant des déformations opposées,
- des moyens de mesure associés à chaque vérin souple et adaptés pour délivrer un signal représentatif de l'état de déformation dudit vérin souple.

La présente invention se rapporte à des perfectionnements à ce type de dispositif.

Un objectif de l'invention est en particulier de fournir un dispositif dans lequel tout déplacement s'effectue sous l'action d'une compression hydraulique en vue d'éliminer les limitations de puissance que conditionne l'apparition de phénomènes de cavitation dans les systèmes en dépression.

Un autre objectif est d'autoriser des déplacements précis non affectés par des déformations parasites des divers organes souples du système (conduit de liaison, soufflets) ou par la compressibilité du fluide utilisé (en général un liquide pour limiter cette compressibilité).

A cet effet, le dispositif du type défini précédemment est équipé :

- d'une unité de traitement agencée pour recevoir les signaux issus des moyens de mesure associés à chacun des vérins souples et adaptée pour délivrer des signaux différentiels représentatifs, pour chaque paire de vérins souples associés, de la différence des états de déformations des deux vérins de ladite paire,
- d'une unité de génération de signaux de consigne adaptée pour délivrer des signaux de consigne correspondant à des états de déformation souhaités des paires de vérins souples,
- d'une unité de comparaison agencée pour recevoir les signaux différentiels précités et les signaux de consigne et adaptée pour délivrer des signaux d'erreur représentatifs des écarts entre lesdits signaux,
- de moyens de commande des moyens moteurs précités, agencés pour recevoir les signaux d'erreur et adaptés pour commander lesdits moyens moteurs dans le sens tendant à annuler les signaux d'erreur.

Comme on le comprendra mieux plus loin, un tel dispositif agencé en boucle fermée fonctionne selon un mode différentiel aussi bien au niveau des moyens actionneurs (vérins souples) que des moyens de commande de ceux-ci (réservoirs de capacité variable, moyens moteurs et moyens de mesure). Il est ainsi possible d'obtenir des déplacements très précis de l'élément porté, qui ne soient influencés par aucun phénomène parasite ; de plus, chaque déplacement s'effectue par compression hydraulique dans l'un des deux vérins associés, de sorte que sont totalement écartés les phénomènes de cavitation qui pourraient apparaître au-delà d'une certaine puissance.

La description qui suit en référence aux dessins annexés présente à titre d'exemples non limitatifs des modes de réalisation de l'invention ; sur ces dessins :
- la figure 1 est une vue schématique partielle illustrant un premier mode de réalisation de l'invention,
- la figure 2 est une vue schématique partielle présentant un autre mode de réalisation.

Le dispositif de liaison visé par l'invention peut présenter des agencements divers en vue de réaliser un système de manipulation fonction de l'application envisagée. Ce dispositif de liaison comprend plusieurs vérins associés deux à deux qui sont commandés par des réservoirs de capacité variable, eux-mêmes associés deux à deux, de sorte que chaque paire de vérins associés forme avec chaque paire de réservoirs associés un système différentiel en boucle fermée.

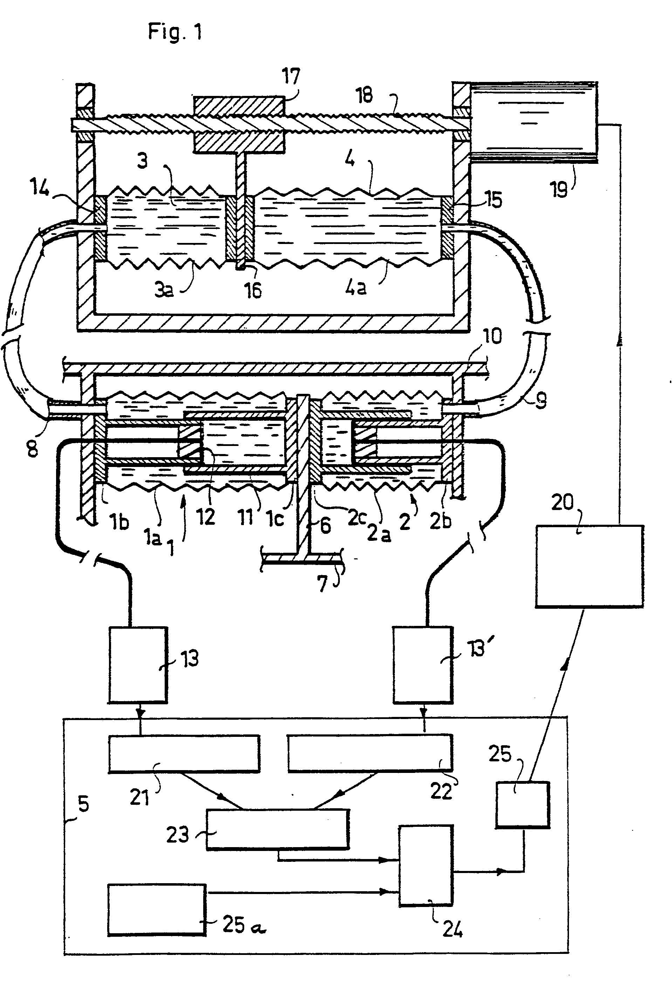

A la figure 1, a été représentée une paire de vérins associés, les réservoirs correspondants et une unité électronique de traitement 5 assurant l'asservissement du système.

En cet exemple, les vérins 1 et 2 sont constitués par deux soufflets 1a ou 2a assujettis chacun sur deux parois rigides 1b, 1c ou 2b, 2c. Les soufflets 1a, 2a s'étendent le long d'un même axe, de part et d'autre d'une paroi rigide intermédiaire 6 qui est assujettie entre les parois 1c et 2c et est solidaire d'une membrure 7.

Les autres parois 1b et 2b sont traversées par des conduits de fluide 8 et 9 et sont en l'exemple solidaires d'une membrure 10. Les vérins 1 et 2 permettent ainsi de déplacer la membrure 7 par rapport à la membrure 10 ; ces membrures constituent les membrures intermédiaires qui peuvent être agencées avec d'autres paires de vérins, conformément aux exemples décrits dans la demande de brevet EP-A-113 145 déjà évoquée ou selon tout autre agencement adapté à l'application envisagée.

En l'exemple, chaque paire de vérins 1 et 2 du dispositif est agencée de sorte que les centres des deux parois 1b, 1c ou 2b, 2c qui délimitent chaque vérin, soient constamment positionnés sur l'axe commun des soufflets 1a et 2a ; ceci peut être obtenu grâce à des guides tels que 11, qui guident le déplacement des parois des vérins selon un mouvement de translation parallèle à l'axe.

En outre, chaque vérin est doté d'un émetteur-récepteur ultrasonore 12 disposé dans chaque soufflet sur l'axe de celui-ci en position fixe par rapport à l'une des deux parois (1b), de façon à pouvoir émettre en direction du centre de l'autre paroi (1c) ; cet émetteur-récepteur est associé à des moyens électroniques 13 ou 13' (tels que circuit bistable) adaptés pour délivrer un signal électrique représentatif du temps séparant une émission de la réception de l'écho correspondant.

De tel moyens de mesure permettant de connaître à chaque instant l'état de déformation du vérin considéré sont connus en eux-mêmes et peuvent notamment comprendre une pastille de quartz associée à des moyens d'excitation impulsionnelle à sa fréquence propre, la réception étant assurée dans l'exemple visé par la même pastille. Le temps qui sépare une émission de la réception de son écho est représentatif du double de la distance séparant la pastille 12 et la paroi 1c et donc de l'état de déformation du vérin le long de son axe.

Il est également possible, dans une variante, de dissocier l'émetteur et le récepteur et de prévoir dans chaque soufflet une pastille émettrice au centre d'une paroi, apte à émettre en direction du centre de l'autre paroi, une pastille réceptrice au centre de cette autre paroi et des moyens électroniques adaptés pour délivrer un signal électrique représentatif du temps séparant une émission par l'émetteur de la réception par le récepteur.

Par ailleurs, les deux vérins 1 et 2 sont hydrauliquement reliés par les conduits 8 et 9 aux réservoirs de capacité variable 3 et 4. Ces réservoirs sont constitués par deux soufflets 3a, 4a s'étendant le long d'un même axe entre deux parois fixes 14 et 15 portées par un bâti et traversées par les conduits de fluide 8 et 9.

Les soufflets 3a et 4a sont séparés par une paroi intermédiaire 16 mobile le long de l'axe des soufflets et liée à des moyens moteurs en vue d'engendrer son déplacement le long de cet axe.

En l'exemple, la paroi intermédiaire 16 est assujettie à une douille taraudée 17 portée par une vis sans fin 18 parallèle a l'axe des soufflets.

Un moto-réducteur électrique 19 alimenté par un circuit de puissance 20 permet d'entraîner en rotation la vis 18 dans un sens ou dans l'autre.

Les deux signaux électriques issus des moyens de mesure (12, 13) qui sont associés à chaque paire de vérins (1, 2) sont traités par l'unité 5. Chacun des deux signaux est délivré vers un circuit d'échantillonnage 21 ou 22, qui génère une série d'impulsions dont le nombre proportionnel à la durée du signal initial est représentatif de l'état de déformation du vérin considéré. Les impulsions issues des circuits 21 et 22 sont envoyées vers un différentiateur 23 qui fournit un signal numérique différentiel, représentatif de la différence du nombre d'impulsions entre les deux signaux issus des circuits d'échantillonnage.

Ce signal numérique est représentatif de l'état du système différentiel constitué par les deux vérins 1 et 2.

Ce signal numérique est envoyé vers une unité de comparaison 24 comprenant des compteurs numériques et recevant également un signal numérique de consigne issu d'une unité de génération (25a) ; cette dernière est adaptée pour délivrer des signaux numériques de consigne correspondant aux états de déformations souhaités des vérins 1 et 2.

L'unité de comparaison 24 délivre un signal d'erreur numérique vers un convertisseur numérique/analogique 25 ; après conversion, le signal est amplifié et commande le circuit de puissance 20 qui alimente le moto-réducteur 19 ; la rotation de ce dernier est commandée dans le sens tendant à annuler le signal de commande.

Les diverses fonctions ci-dessus évoquées peuvent être assurées par un microprocesseur qui engendrera les signaux de consigne grâce à une programmation appropriée et commandera l'ensemble des moteurs 19 associés à l'ensemble des paires de réservoirs 3, 4 en fonction de ces signaux de consigne et des signaux de mesure.

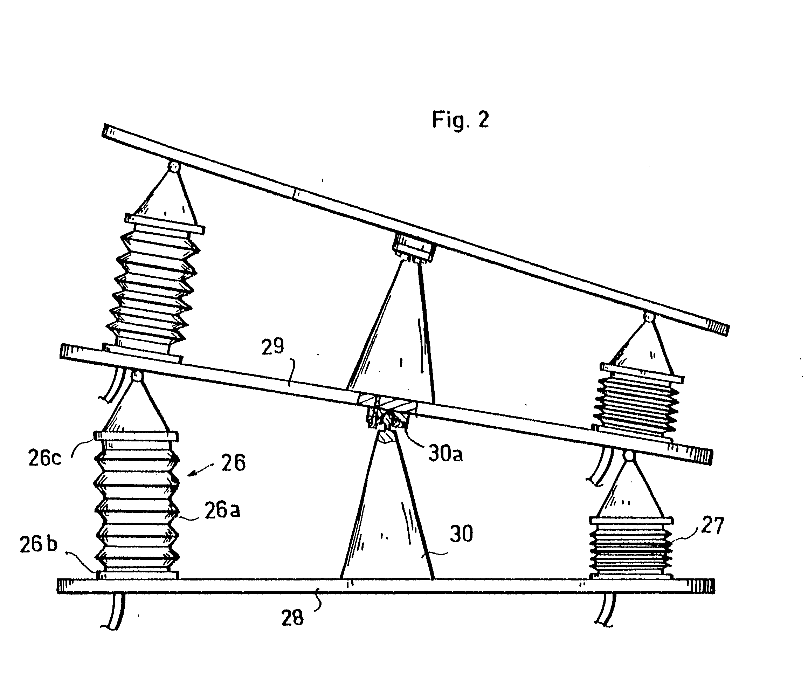

La figure 2 schématise une variante du dispositif. Dans celle-ci, les réservoirs de capacité variable et l'unité de traitement sont similaires au mode de réalisation précédent et n'ont pas été représentés. Par contre, les vérins souples 26 et 27 sont appariés de façon à faire pivoter une première membrure rigide telle que 28 par rapport à une seconde membrure rigide telle que 29.

Ces vérins appariés sont actionnés comme précédemment selon un mode différentiel de façon à subir des déformations opposées.

Ils s'étendent le long de deux axes sensiblement parallèles entre les deux membrures rigides 26 et 27. Chaque vérin est constitué par un soufflet tel que 26a assujetti sur deux parois rigides 26b et 26c. La paroi 26b est fixée sur la membrure 28 et est traversée par le conduit hydraulique. La paroi 26c porte une bille de roulement en appui contre la membrure 29. Les vérins 26 et 27 sont, en outre, dotés de moyens de mesure du même type que précédemment, aptes à délivrer un signal électrique représentatif de leur état de déformation.

Par ailleurs, les deux membrures 28 et 29 sont reliées par une entretoise 30 fixée sur la membrure 28 et articulée sur la membrure 29 au moyen d'une rotule 30a.

L'état de déformation des vérins 26 et 27 commande l'angle d'inclinaison de la membrure 29 par rapport à la membrure 28, dans le plan des deux vérins.

Un système analogue de deux vérins associés peut être prévu dans un plan orthogonal afin de commander l'inclinaison des deux membrures dans ce plan. Il est ainsi possible d'incliner la membrure 29 autour de son articulation selon toutes les directions de l'espace avec une amplitude fonction de la course des vérins.

Plusieurs systèmes tels que définis ci-dessus peuvent être empilés en série pour réaliser un bras manipulateur apte à se déplacer dans l'espace de façon extrêmement précise. Le bouclage des systèmes de commande en mode différentiel rend les déplacements indépendants de la charge, de la compressibilité du liquide utilisé ou des déformations parasites.

En outre, tout déplacement s'effectue avec un vérin en compression, ce qui autorise des puissances très élevées.

## Revendications

1. Dispositif mobile de liaison, à plusieurs degrés de liberté, entre un élément porteur et un élément porté, permettant de faire subir des déplacements de l'élément porté par rapport à l'élément porteur, ledit dispositif conforme à l'une des revendications de la demande principale comprenant :
   - une membrure-support adaptée pour être fixée sur l'élément porteur,
   - une membrure mobile adaptée pour permettre la fixation de l'élément porté,
   - une pluralité de vérins souples (1, 2) agencés entre la membrure-support et la membrure mobile de façon à maintenir ladite membrure mobile par rapport à ladite membrure-support dans une position relative fonction de l'ensemble des états de déformations desdits vérins souples,
   - associé et connecté à chacun desdits vérins souples, un réservoir de capacité variable (3, 4) formant avec le vérin souple considéré un circuit de fluide fermé de sorte que la capacité dudit réservoir impose l'état de déformation du vérin souple, chaque ensemble formé d'un vérin souple (1) et d'un réservoir de capacité variable (3) étant associé à un second ensemble formé d'un vérin souple (2) et d'un réservoir de capacité variable (4) pour former un système différentiel,
   - des moyens moteurs (19) aptes à permettre de faire varier la capacité des réservoirs (3, 4) précités afin de l'ajuster à des valeurs déterminées, lesdits moyens étant agencés pour actionner simultanément deux réservoirs associés (3, 4) de sorte que leur capacité varie en sens inverse, les deux vérins souples associés (1, 2) subissant des déformations opposées,
   - des moyens de mesure (12, 13) associés à chaque vérin souple et adaptés pour délivrer un signal représentatif de l'état de déformation dudit vérin souple, ledit dispositif comprenant :
   - une unité de traitement (21, 22, 23) agencée pour recevoir les signaux issus des moyens de mesure associés à chacun des vérins souples et adaptée pour délivrer des signaux différentiels représentatifs, pour chaque paire de vérins souples associés (1, 2), de la différence des états de déformations des deux vérins de ladite paire,
   - une unité (25a) de génération de signaux de consigne adaptée pour délivrer des signaux de consigne correspondant à des états de déformation souhaités des paires de vérins souples,
   - une unité de comparaison (24) agencée pour recevoir les signaux différentiels précités et les signaux de consigne et adaptée pour délivrer des signaux d'erreur représentatifs des écarts entre lesdits signaux,
   - des moyens (20, 25) de commande des moyens moteurs (19) précités, agencés pour recevoir les signaux d'erreur et adaptés pour commander lesdits moyens moteurs dans le sens tendant à annuler les signaux d'erreur.

2. Dispositif selon la revendication 1, dans lequel chaque paire de vérins souples associés (1, 2) est constituée par deux soufflets (1a, 2a) s'étendant de part et d'autre d'une paroi rigide intermédiaire (6), le long d'un même axe, chaque soufflet étant obturé à son extrémité opposée à ladite paroi intermédiaire par une autre paroi (1b, 2b), traversée par un conduit de fluide (8, 9).

3. Dispositif selon la revendication 1, caractérisé en ce que chaque paire de vérins souples associés (26, 27) est constituée par deux soufflets (26a), chacun, assujettis sur deux parois rigides (26b, 26c) situées aux deux extrémités desdits soufflets, lesdits vérins s'étendant entre deux membrures rigides (28, 29) agencées pour pouvoir pivoter l'une par rapport à l'autre sous l'effet de l'action différentielle des deux vérins souples (26, 27).

4. Dispositif selon l'une des revendications 2 ou 3, caractérisé en ce que :
   - chaque paire de vérins souples est agencée de sorte que les centres des deux parois qui délimitent chaque vérin soient constamment positionnés sur l'axe des soufflets,
   - les moyens de mesure comprennent, d'une part, un émetteur-récepteur ultrasonore (12) disposé dans chaque soufflet sur l'axe de celui-ci en position fixe par rapport à l'une des deux parois précitées, de façon à émettre en direction du centre de l'autre paroi, d'autre part, des moyens électroniques (13, 13') adaptés pour délivrer un signal électrique représentatif du temps séparant une émission de la réception de l'écho correspondant.

5. Dispositif selon l'une des revendications 2 ou 3, caractérisé en ce que :
   - chaque paire de vérins souples est agencée de sorte que les centres des deux parois qui délimitent chaque vérin soient constamment positionnés sur l'axe des soufflets,
   - les moyens de mesure comprennent, d'une part, un émetteur ultrasonore disposé dans cha-

que soufflet au centre d'une des deux parois précitées, de façon à émettre en direction du centre de l'autre paroi, d'autre part, un récepteur ultrasonore disposé au centre de cette dernière paroi, enfin des moyens électroniques adaptés pour délivrer un signal électrique représentatif du temps séparant une émission par l'émetteur de la réception par le récepteur.

6. Dispositif selon l'une des revendications 4 ou 5, dans lequel l'émission ultrasonore est assurée par une pastille de quartz associée à des moyens d'excitation impulsionnelle à sa fréquence propre, la réception étant assurée par la même pastille de quartz ou par une pastille séparée.

7. Dispositif selon l'une des revendications 1, 2, 3, 4, 5 ou 6, caractérisé en ce que chaque paire de réservoirs associés (3, 4) est constituée par deux soufflets (3a, 4a) s'étendant le long d'un même axe entre deux parois fixes (14, 15) traversées par des conduits de fluide (8, 9), lesdits soufflets étant séparés par une paroi intermédiaire (16) mobile le long de l'axe précité et liée aux moyens moteurs (19) en vue d'engendrer son déplacement le long de cet axe.

8. Dispositif selon la revendication 7, dans lequel la paroi intermédiaire (16) de chaque paire de réservoirs associés est assujettie à une douille taraudée (17) portée par une vis sans fin (18) parallèle à l'axe des soufflets, un moto-réducteur (19) étant associé à ladite vis sans fin pour pouvoir l'entraîner en rotation dans un sens ou dans l'autre.

9. Dispositif selon l'une des revendications 1, 2, 3, 4, 5, 6, 7 ou 8, dans lequel :
- l'unité de traitement (21, 22, 23) comprend des circuits d'échantillonnage et un différenciateur, en vue de délivrer des signaux différentiels numériques,
- l'unité de génération (25a) est adaptée pour délivrer des signaux de consigne numériques,
- l'unité de comparaison (24) comprend des compteurs numériques adaptés pour délivrer des signaux d'erreurs numériques,
- les moyens de commande (20, 25) comprennent un convertisseur numérique/analogique et un circuit de puissance apte à alimenter les moyens moteurs constitués par des moto-réducteurs (19).

### Claims

1. Mobile joint with several degrees of freedom between a carrying element and a carried element, enabling the carried element to be displaced in relation to the carrying element, said device being in accordance with one of the claims of the main application and comprising
- a support member capable of being secured to the carrying element,
- a mobile member so designed as to enable securing of the carried element,
- several flexible jacks (1, 2) fitted between the support member and the mobile member so as to maintain said mobile member in a relative position with regard to said support member, depending on the totality of deformation states of said flexible jacks,
- linked with and connected to each of said flexible jacks a reservoir of variable capacity (3, 4) forming together with the flexible jack in question a closed fluid circuit such that the capacity of said reservoir produces a state of deformation of the flexible jack, whereby each assembly formed by a flexible jack (1) and a reservoir of variable capacity (3) is linked to a second assembly formed by a flexible jack (2) and a reservoir of variable capacity (4) so as to give rise to a differential system,
- driving means (19) so designed as to enable variation of the capacity of above reservoirs (3, 4) in order to adjust it to set values, said means being arranged so as to act simultaneously on two linked reservoirs (3, 4) in such a way that their capacity varies inversely, the two linked flexible jacks (1, 2) undergoing opposite deformations,
- measuring means (12, 13) associated with each flexible jack and designed so as to supply a signal representative of the state of deformation of said flexible jack, said device comprising
- a processing unit (21, 22, 23) designed to receive the signals emanating from measuring means associated with each of the flexible jacks and capable of delivering differential signals representative, with each pair of linked flexible jacks (1, 2), of the difference in the states of deformation of the two jacks of said pair,
- a unit (25a) for generating command signals, capable of supplying command signals corresponding to the required states of deformation of pairs of flexible jacks,
- a comparator unit (24) designed to receive the above differential signals and the command signals and capable of supplying error signals representative of the distances between said signals,
- means (20, 25) for controlling the above driving means (19), designed to receive the error signals and capable of driving said driving means in the direction tending to eliminate the error signals.

2. Device according to claim 1, in which each pair of linked flexible jacks (1, 2) is composed of two bellows (1a, 2a) extending on both sides of a rigid intermediary wall (6) along an identical axis, each bellows being blocked at the end opposite said intermediate wall by another wall (1b, 2b) through which passes a fluid line (8, 9).

3. Device according to claim 1, characterised in that each pair of linked flexible jacks (26, 27) comprises two bellows (26a), each of which is secured to two rigid walls (26b, 26c) located at the ends of said bellows, said jacks extending between two rigid members (28, 29) so designed as to be capable of pivoting one in relation to the other subject to the differential action of the two flexible jacks (26, 27).

4. Device according to one of claims 2 or 3, characterised in that
- each pair of flexible jacks is so designed that the centres of the two walls delimiting each jack are constantly located on the axis of the bellows,

- the measuring means comprise, on the one hand, an ultrasonic transceiver (12) arranged in each bellows on the axis of the latter in a position fixed in relation to one of the two above walls, so as to transmit in the direction of the centre of the other wall, and on the cther hand electronic means (13, 13') designed to deliver an electric signal representative of the time separating a transmission from the reception of the corresponding echo.

5. Device according to one of claims 2 or 3, characterised in that

- each pair of flexible jacks is arranged in such a way as to ensure that the centres of the two walls delimiting each jack are constantly located on the axis of the bellows,

- the measuring means comprise, on the one hand, an ultrasonic transmitter provided within every bellows at the centre of one of the two above walls, so as to transmit in the direction of the centre of the other wall, on the other hand an ultrasonic receiver provided at the centre of said last wall, and finally electronic means capable of supplying an electric signal representative of the time separating a transmission by the transmitter from the reception by the receiver.

6. Device according to one of claims 4 or 5, in which the ultrasonic transmission is ensured by a quartz plate linked, at its inherent frequency, to impulse excitation means, the reception being ensured by the same quartz plate or by a separate plate.

7. Device according to one of claims 1, 2, 3, 4, 5 or 6, characterised in that each pair of associated reservoirs (3, 4) is composed by two bellows (3a, 4a) extending along an identical axis between two fixed walls (14, 15) through which pass fluid lines (8, 9), said bellows being separated by a mobile intermediate wall (16) along the above axis and linked to the driving means (19) with a view to bringing about their displacement along said axis.

8. Device according to claim 7, in which the intermediate wall (16) of each pair of linked reservoirs is secured to a threaded bush (17) carried on a threaded rod (18) parallel to the axis of the bellows, with a motor/reducer (19) linked to said threaded rod so as to be able to pull by rotation in one direction or the other.

9. Device according to one of claims 1, 2, 3, 4, 5, 6, 7 or 8, in which

- the processing unit (21, 22, 23) comprises sampling circuits and a differentiator with a view to supplying digital differential signals,

- the generating unit (25a) is capable of supplying digital command signals,

- the comparator unit (24) comprises digital counters capable of supplying digital error signals,

- the means of control (20, 25) comprise a digital/analog converter and a power circuit capable of supplying the driving means constituted by motor/reducers (19).

**Patentansprüche**

1. Bewegliches Gelenk mit mehreren Freiheitsgraden zwischen einem tragenden Element und einem getragenen Element, das Verlagerungen des getragenen Elements im Verhältnis zu dem tragenden Element ermöglicht, wobei die besagte Vorrichtung einem der Ansprüche der Hauptanmeldung entspricht und folgende Teile umfaßt :

- ein Stützteil, das zur Befestigung auf dem tragenden Element geeignet ist,

- ein bewegliches Teil, das so beschaffen ist, daß es die Befestigung des getragenen Elements gestattet,

- mehrere biegsame Huborgane (1, 2), die so zwischen dem Stützteil und dem beweglichen Teil angeordnet sind, daß das besagte bewegliche Teil im Verhältnis zu dem besagten Stützteil in einer relativen Lage erhalten wird, die von der Gesamtheit der Verformungszustände der besagten biegsamen Huborgane abhängig ist,

- in Verbindung mit und angeschlossen an jedem der besagten biegsamen Huborgane einen Behälter veränderlichen Rauminhalts (3, 4), der gemeinsam mit dem betreffenden biegsamen Huborgan einen geschlossenen Flüssigkeitskreis bildet, so daß der Rauminhalt des besagten Behälters den Verformungszustand des biegsamen Huborgans bestimmt, wobei jede durch ein biegsames Huborgan (1) und einen Behälter veränderlichen Rauminhalts (3) gebildete Baugruppe mit einer zweiten durch ein biegsames Huborgan (2) und einen Behälter veränderlichen Rauminhalts (4) gebildeten Baugruppe in Verbindung steht, wodurch ein Differentialsystem entsteht,

- Antriebsmittel (19), die Änderung des Rauminhalts der vorstehend genannten Behälter (3, 4) ermöglichen, um diesen an Sollwerte anzupassen, wobei die besagten Mittel so beschaffen sind, daß sie gleichzeitig zwei in Verbindung stehende Behälter (3, 4) betätigen, auf eine Weise, in der sich ihr Rauminhalt in umgekehrtem Sinne ändert, wobei die beiden in Verbindung stehenden biegsamen Huborgane (1, 2) entgegengesetzte Verformungen erfahren,

- Meßmittel (12, 13), die mit jedem biegsamen Huborgan in Verbindung stehen und so beschaffen sind, daß sie ein für den Verformungszustand des besagten biegsamen Huborgans repräsentatives Signal liefern, wobei die besagte Vorrichtung folgende Teile umfaßt :

- eine Verarbeitungseinheit (21, 22, 23), die so beschaffen ist, daß sie von den mit jedem der biegsamen Huborgane in Verbindung stehenden Meßmittel abgegebene Signale empfängt, und die in der Lage ist Differentialsignale zu liefern, die, bei jedem Paar in Verbindung stehender biegsamer Huborgane (1, 2) für den Unterschied in den Verformungszuständen der beiden Huborgane des besagten Paars repräsentativ sind,

- eine Einheit (25a) zur Erzeugung von Befehlssignalen, die in der Lage ist, Befehlssignale zu liefern, die den gewünschten Verformungszuständen von Paaren biegsamer Huborgane entsprechen,

- eine Vergleichseinheit (24), die so beschaffen ist, daß sie die vorstehend genannten Differentialsignale und die Befehlssignale empfängt, und die in der Lage ist Fehlersignale zu liefern, die für die Abstände zwischen den besagten Signalen repräsentativ sind,

- Mittel (20, 25) zur Steuerung der vorstehend genannten Antriebsmittel (19), die so beschaffen sind, daß sie die Fehlersignale empfangen, und die in der Lage sind die besagten Antriebsmittel in dem Sinne zu betreiben, der zur Löschung der Fehlersignale führt.

2. Vorrichtung im Einklang mit Anspruch 1, bei der jedes Paar in Verbindung stehender biegsamer Huborgane (1, 2) zwei Bälge (1a, 2a) umfaßt, die sich zu beiden Seiten einer starren Zwischenwand (6) entlang einer gemeinsamen Achse erstrecken, wobei jeder Balg an seinem der besagten Zwischenwand gegenüberliegenden Ende durch eine andere Wand (1b, 2b) abgeschlossen ist, durch die eine Flüssigkeitsleitung (8, 9) hindurchführt.

3. Vorrichtung im Einklang mit Anspruch 1, dadurch gekennzeichnet, daß jedes Paar in Verbindung stehender biegsamer Huborgane (26, 27) zwei Bälge (26a) umfaßt, von denen jeder an zwei starren Wänden (26b, 26c) angebracht ist, die sich an den beiden Enden der besagten Bälge befinden, wobei sich die besagten Huborgane zwischen zwei starren Teilen (28, 29) erstrecken, die so beschaffen sind, daß sie sich unter der differentiellen Einwirkung der beiden biegsamen Huborgane (26, 27) im Verhältnis zueinander schwenken lassen.

4. Vorrichtung im Einklang mit einem der Ansprüche 2 oder 3, dadurch gekennzeichnet,

- daß jedes Paar biegsamer Huborgane so beschaffen ist, daß die Mittelpunkte der beiden jedes Huborgan abgrenzenden Wände ständig auf der Achse der Bälge liegen,

- daß die Meßmittel einerseits einen Ultraschall-Sender-Empfänger (12) umfassen, der in jedem Balg auf dessen Achse in einer im Verhältnis zu einer der vorstehend genannten beiden Wände festen Lage angeordnet ist, so daß er in Richtung des Mittelpunkts der anderen Wand sendet, und andererseits elektronische Mittel (13, 13') umfaßt, die so beschaffen sind, daß sie ein elektrisches Signal liefern, das für die eine Sendung von dem Empfang des entsprechenden Echos trennende Zeit repräsentativ ist.

5. Vorrichtung im Einklang mit einem der Ansprüche 2 oder 3, dadurch gekennzeichnet,

- daß jedes Paar biegsamer Huborgane so beschaffen ist, daß die Mittelpunkte der beiden Wände, die jedes Huborgan abgrenzen, ständig auf der Achse der Bälge liegen,

- daß die Meßmittel einerseits einen Ultraschallsender umfassen, der in jedem Balg im Mittelpunkt einer der beiden vorstehend genannten Wände angeordnet ist, so daß er in der Richtung des Mittelpunkts der anderen Wand sendet, andererseits einen Ultraschallempfänger, der in der Mitte dieser letzteren Wand angeordnet ist, und schließlich elektronische Mittel, die so beschaffen sind, daß sie ein elektrisches Signal liefern, das für die eine Sendung durch den Sender von dem Empfang durch den Empfänger trennende Zeit repräsentativ ist.

6. Vorrichtung im Einklang mit einem der Ansprüche 4 oder 5, bei der die Ultraschallsendung durch eine Quarzscheibe gewährleistet ist, die mit Mitteln der Pulserregung bei ihrer Eigenfrequenz in Verbindung steht, wobei der Empfang durch die gleiche Quarzscheibe oder durch eine getrennte Scheibe gewährleistet wird.

7. Vorrichtung im Einklang mit einem der Ansprüche 1, 2, 3, 4, 5 oder 6, dadurch gekennzeichnet, daß jedes Paar in Verbindung stehender Behälter (3, 4) zwei Bälge (3a, 4a) umfaßt, die sich entlang der gleichen Achse zwischen zwei festen Wänden (14, 15) erstrecken und durch die Flüssigkeitsleitungen (8, 9) hindurchführen, wobei die besagten Bälge durch eine entlang der vorstehend genannten Achse bewegliche Zwischenwand (16) getrennt sind, die mit den Antriebsmitteln (19) verbunden ist, um ihre Verlagerung entlang dieser Achse zu bewirken.

8. Vorrichtung im Einklang mit Anspruch 7, bei der die Zwischenwand (16) jedes Paares in Verbindung stehender Behälter an einer Gewindebuchse (17) angebracht ist, die sich auf einer parallel zu der Balgachse verlaufenden Schnecke (18) befindet, wobei ein Motorreduktor (19) mit der besagten Schnecke so verbunden ist, daß er drehend in der einen oder in der anderen Richtung ziehen kann.

9. Vorrichtung im Einklang mit einem der Ansprüche 1, 2, 3, 4, 5, 6, 7 oder 8, bei der

- die Verarbeitungseinheit (21, 22, 23) Probenahmekreise und eine Differenzierstufe umfaßt, um digitale Differentialsignale zu liefern,

- die Erzeugungseinheit (25a) so beschaffen ist, daß sie digitale Befehlssignale liefert,

- die Vergleichseinheit (24) numerische Zähler umfaßt, die so beschaffen sind, daß sie digitale Fehlersignale liefern,

- die Befehlsmittel (20, 25) einen Digital/Analog-Umformer und einen Stromkreis umfassen, der in der Lage ist, die durch die Motorreduktoren (19) gebildeten Antriebsmittel zu speisen.

Fig. 1

Fig. 2